Europäisches Patentamt

**European Patent Office**

**Office européen des brevets**

(19)

(11) Publication number: **0 094 028**
**A1**

(12) # EUROPEAN PATENT APPLICATION

(21) Application number: **83104393.0**

(51) Int. Cl.³: **A 23 K 1/00**

(22) Date of filing: **04.05.83**

(30) Priority: **05.05.82 US 375169**
**10.03.83 US 472051**

(43) Date of publication of application: **16.11.83**
**Bulletin 83/46**

(84) Designated Contracting States: **AT BE CH DE FR GB IT LI LU NL SE**

(71) Applicant: **PHILLIPS PETROLEUM COMPANY, 5th and Keeler, Bartlesville Oklahoma 74004 (US)**

(72) Inventor: **Stroman, David Womack, 2504 S.W. Centre Road, Bartlesville Oklahoma 74003 (US)**
Inventor: **Wegner, Eugene Herman, 1509 S.E. Harris Drive, Bartlesville Oklahoma 74003 (US)**

(74) Representative: **Dost, Wolfgang, Dr.rer.nat., Dipl.-Chem. et al, Patent- und Rechtsanwälte Bardehle-Pagenberg-Dost-Altenburg & Partner Postfach 86 06 20, D-8000 München 86 (DE)**

(54) Single cell protein composition, process for enhancing the level of physiologically active protein, and delivery process.

(57) A process and composition for enhancing the level of physiologically active protein in an animal are provided. The process comprises feeding to an animal a novel feed containing an effective amount of single cell protein composition having a physiologically active protein as a part thereof.

EP 0 094 028 A1

Single Cell Protein Composition, Process for Enhancing
the Level of Physiologically Active Protein, and Delivery
Process


This invention relates to enhancing the level of
physiologically active protein in an animal by directly feeding single
cell protein containing physiologically active protein as a part thereof
to an animal recipient. In one of its aspects, the invention provides a
process for enhancing the level of physiologically active protein in an
animal by feeding it a physiologically active protein. In another one of
its aspects, the invention provides for the delivery of a novel
composition for increasing the level of physiologically active protein in
an animal. In still another aspect, this invention provides for an
integrated process for the delivery of single cell protein having
physiologically active protein as a part thereof to an animal recipient.

Administering physiologically active substances such as
proteins, vaccines, hormones, antibiotics, and the like, to animals, has
been most commonly effected by direct injection. A disadvantage of this
process is that it is very time consuming and expensive. The
administration of a physiologically active protein, such as growth
hormone, has typically employed hormone that has been extracted and
purified from producing cells which is a time consuming and costly
process. In addition, if a physiologically active substance is
administered by injection or by time released implants, then an apparatus
or means to inject the substance must be provided for each individual
animal involved. This procedure is labor intensive and requires
considerable manufacturing costs.

0094028

It is an object of this invention to administer a physiologically active protein to an animal in a process which is cost effective considering the time, labor, and expense involved. It is another object of this invention to administer a physiologically active protein to an animal recipient in a form which will impart physiological effects to the animal.

Other aspects, objects, and the several advantages of the present invention will be apparent from the study of the disclosure and claims.

In accordance with the present invention, it has been discovered that one can administer a physiologically active protein to an animal recipient by directly feeding single cell protein having physiologically active protein as a part thereof. Such a process for delivery is economically efficient considering the time, labor, and expense involved since it delivers the physiologically active protein to the intended recipient in an economical form and in a process which is neither time nor labor intensive.

In accordance with the present invention, the term physiologically active protein is defined to be any protein having biological activity in a living animal. For the purposes of this invention, a physiologically active protein is differentiated from proteins which are assimilated by animals only for their nutritional value. In the latter situation, the proteins are broken down directly into their amino acid components and the amino acids are then utilized as a source of nutrition. On the other hand, a physiologically active protein is one which is assimilated in an essentially intact form wherein its role is not for nutritive purposes but for achieving a physiological effect.

Only physiologically active proteins which enhance beneficial physiological effects in recipient animals are contemplated for use in accordance with the present invention. There are broad classes of physiologically active proteins which enhance beneficial physiological properties in their recipients such as proteins which effect growth or growth rate, proteins which increase efficiency of feed utilization, proteins which protect the health of the recipient, proteins which enhance food production by an animal, and proteins which regulate reproductive cycles.

A class of physiologically active proteins which enhance growth are growth hormones which are generally species specific in that the particular hormone involved will be most active in the same species from which it originated. For example, bovine growth hormone is most effective when administered to a member of the genus Bos. The same is true for porcine growth hormone administered to a member of the species Sus scrofa, and chicken growth hormone administered to a member of the species Gallus gallus. Another example of proteins which enhance growth is growth hormone releasing factor, sometimes called somatocrinin, which stimulates the release of growth hormones.

Another class of proteins which are physiologically active are peptides which are active in the intestine and which may affect feed utilization and absorption by the animal. Examples of such peptides are insulin, glucagon, somatostatin, epidermal growth factor, and vasoactive intestinal peptide.

There are physiologically active proteins which can be used to protect the health of an animal recipient. One example of such physiologically active protein exists in the form of antigens which are used to elicit antibody formation to protect against certain infectious diseases such as foot-and-mouth disease and rabies. Another example is the stimulation of the immune host-defense system which can be mediated by physiologically active proteins.

Physiologically active proteins also can be used to control animal reproductive cycles. Follicle stimulating hormone (FSH) and leutinizing hormone (LH) are two such physiologically active proteins. FSH stimulates sperm production, growth of ovarian follicles, and estrogen production. LH stimulates release of egg cells and production of testosterone and progesterone, two other physiologically active compounds which help control animal reproduction cycles.

Proteins which are physiologically active can be used to aid in increasing food production by an animal. For example, prolactin helps to stimulate milk secretion in animals. As another example, porcine growth hormone can alter the fat/lean ratio in meat products.

The organisms used in the process of this invention include any bacteria, fungi, or yeast whose genetic material can be modified by the conventional processes of genetic manipulation known in the art to impart to the microorganism the capability of synthesizing the particular physiologically active protein desired. The gene coding for the synthesis of a physiologically active protein can be obtained from the natural source of that protein or a synthetic gene can be constructed utilizing the amino acid or nucleotide sequence information or combinations thereof. This gene is incorporated by the process of genetic manipulation into the genetic material of such microorganisms. Researchers have recently been using conventional techniques of genetic manipulation to remove genes which code for the production of a particular substance from an organism and incorporate that gene into another organism so as to render that organism capable of producing the particular substance desired. Plasmids or bacteriophage would be suitable vehicles for moving the genetic material which codes for a physiologically active protein into a particular organism such as E. coli. Both Application EP 0-036-259-A-2 and PCT Application 81/02426 describe conventional techniques of genetic manipulation which have been successfully applied to clone foreign genes into a particular microorganism. Similar processes have been employed for the production by bacteria and yeast of such physiologically active proteins as growth hormone (human, bovine, ovine, and porcine), human interferons, human somatostatin, globin (human and rabbit), viral antigenic determinants (hepatitis, foot-and-mouth, and SV40), serum albumin (human and bovine), bovine renin, and the like.

In accordance with this invention, yeast, fungi, and bacteria can be utilized.

Suitable species of yeasts and fungi include species from the genera Candida, Hansenula, Neurospora, Rhodotorula, Torulopsis, Saccharomyces, Schizosaccharomyces, Pichia, Debaryomyces, Kluyveromyces, Lipomyces, Cryptococcus, Nematospora, and Brettanomyces.

Examples of suitable species include:

| | |
|---|---|
| Candida boidinii | Candida mycoderma |
| Candida utilis | Candida stellatoidea |
| Candida robusta | Candida claussenii |
| Candida rugosa | Brettanomyces petrophilium |
| Hansenula minuta | Hansenula saturnus |
| Hansenula californica | Hansenula mrakii |

| | |
|---|---|
| Hansenula silvicola | Hansenula polymorpha |
| Hansenula wickerhamii | Hansenula capsulata |
| Hansenula glucozyma | Hansenula henricii |
| Hansenula nonfermentans | Hansenula philodendra |
| Torulopsis candida | Torulopsis bolmii |
| Torulopsis versatilis | Torulopsis glabrata |
| Torulopsis molishiana | Torulopsis numodendra |
| Torulopsis nitratophila | Torulopsis pinus |
| Pichia farinosa | Pichia polymorpha |
| Pichia membranaefaciens | Pichia pinus |
| Pichia pastoris | Pichia trehalophila |
| Neurospora crassa | Rhodotorula rubra |
| Saccharomyces cerevisiae | Saccharomyces fragilis |
| Saccharomyces rosei | Saccharomyces acidifaciens |
| Saccharomyces elegans | Saccharomyces rouxii |
| Saccharomyces lactis | Saccharomyces fractum . |
| Schizosaccharomyces pombe | |

Suitable bacteria include species from the genera Bacillus, Escherichia, Streptomyces, Micromonospora, Streptoverticillium, Nocardia, Pseudomonas, Methanomonas, Protaminobacter, Methylococcus, Arthrobacter, Methylomonas, Brevibacterium, Acetobacter, Micrococcus, Rhodopseudomonas, Corynebacterium, Mycobacterium, Archromobacter, and Microbacterium.

Examples of suitable species include:

| | |
|---|---|
| Bacillus subtilis | Brevibacterium roseum |
| Bacillus pumilis | Brevibacterium lactofermentum |
| Bacillus globigii | Brevibacterium ketoglutamicum |
| Bacillus niger | Bacillus nato |
| Escherichia coli | Bacillus amyloliquefaciens |
| Pseudomonas methanolica | Bacillus atenimus |
| Pseudomonas orvilla | Bacillus licheniformis |
| Pseudomonas fluorescens | Pseudomonas ligustri |
| Pseudomonas oleovorans | Pseudomonas methanica |
| Pseudomonas boreopolis | Pseudomonas aeruginosa |
| Pseudomonas methylphilus | Pseudomomas putida |
| Pseudomonas acidovorans | Pseudomonas pyocyanes |
| Pseudomonas aerogenes | Pseudomonas brevis |

| | |
|---|---|
| *Corynebacterium simplex* | *Pseudomonas methanoloxidans* |
| *Corynebacterium alkanum* | *Protaminobacter ruber* |
| *Streptomyces aureofaciens* | *Corynebacterium hydrocarbooxydans* |
| *Streptomyces rimosus* | *Corynebacterium oleophilus* |
| *Streptomyces coelicolor* | *Corynebacterium glutamicum* |
| *Streptomyces griseus* | *Corynebacterium dioxydans* |
| *Streptomyces cyaneus* | *Micrococcus cerificans* |
| *Streptomyces venezuelae* | *Arthrobacter rufescens* |
| *Cornebacterium hydrocarboclastus* | *Arthrobacter simplex* |
| *Corneybacterium viscosus* | *Methanomonas methanica* |
| *Micrococcus rhodius* | *Methylomonas agile* |
| *Arthrobacter parafficum* | *Methylomonas rubrum* |
| *Arthrobacter citreus* | *Nocardia minimum* |
| *Methanomonas methanoxidans* | *Nocardia butanica* |
| *Methylomonas albus* | *Microbacterium ammoniaphilum* |
| *Methylomonas methanolica* | *Brevibacterium butanicum* |
| *Nocardia salmonicolor* | *Brevibacterium flavum* |
| *Nocardia corallina* | *Brevibacterium paraffinolyticum* |
| *Rhodopseudomonas capsulatus* | *Brevibacterium insectiphilium* |
| *Mycobacterium phlei* | *Mycobacterium rhodochrous* |
| *Mycobacterium brevicale* | *Nocardia minimum* |
| *Archromobacter coagulans* | |

Presently preferred microorganisms are *Escherichia coli*, *Bacillus subtilus*, *Saccharomyces cerevisiae*, *Neurospora crassa*, and *Streptomyces coelicolor* since numerous laboratory investigations have revealed extensive information about manipulation of their genetic information.

The above described microorganisms can be grown in a batch or continuous fermentation process in the presence of oxygen, a source of carbon and energy, and an assimilable source of nitrogen. Various types of fermentation processes known in the art can be utilized. For example, a foam-filled fermenter such as described in U.S. 3,982,998 can be used.

Oxygen can be supplied to the fermentation process in the form of air or oxygen enriched air. The source of nitrogen for the fermentation can be any organic or inorganic nitrogen-containing compound which is capable of releasing nitrogen in a form suitable for metabolic utilization by the growing organism. Suitable organic nitrogen compounds include, for example, proteins, amino acids, urea, and the like. Suitable inorganic nitrogen sources include ammonia, ammonium hydroxide, ammonium nitrate, and the like.

The source of carbon used with the above microorganisms can be any carbohydrate or starch containing material. For example, glucose (the hydrolysis product of starch), sucrose containing sugars, or hydrolyzed sucrose can all be utilized in the present invention. Straight chain alcohols having from 1 to 16 carbon atoms per molecule are utilizable as a carbon feedstock. Preferably the alcohol has from 1 to 6 carbon atoms per molecule and more preferably the alcohol will be either ethanol or methanol and most preferably, methanol. Examples of suitable alcohols include methanol, ethanol, 1-propanol, 1-butanol, 1-octanol, 1-dodecanol, 1-hexadecanol, 2-propanol, 2-butanol, 2-hexanol, and the like. Mixtures of alcohols can also be employed if desired. Other oxygenated hydrocarbons such as ketones, aldehydes, acids, esters, and ethers are also suitable substrates and these usually have from 1 to 20 carbon atoms per molecule. Normal-paraffins having from 1 to about 20 carbon atoms per molecule can also be used as substrates.

Sufficient water is maintained in the fermentation so as to provide for the particular requirements of the microorganism employed. Minerals, growth factors, vitamins, and the like generally are added in amounts which vary according to the particular requirement of the microorganism and are generally known to those skilled in the art or are readily determined by those so skilled.

The growth of the microorganism is sensitive to the operating temperature of the fermentor and each particular microorganism has an optimum temperature for growth. Exemplary fermentation temperatures are in the range of about 20°C to about 60°C.

Fermentation pressures are generally within the range of about 0.1 to about 100 atmospheres (10.13 to 10,132 kPa), more usually about 1 to 30 atmospheres (101.3 to 3,039 kPa), and more preferably about 1 to about 5 atmospheres (101.3 to 506.5 kPa) since the higher pressures mean a greater level of dissolved oxygen in the aqueous medium and usually higher productivities.

It is generally recognized by those skilled in the art that many organisms can be fermented under anaerobic conditions as well as aerobic conditions. Expression of the inserted genetic information is not primarily a function of the anaerobic or aerobic nature of the fermentation. Thus, the process of the present invention is equally applicable regardless of the choice of fermentation conditions, i.e.,

aerobic or anaerobic. In some circumstances, enhanced expression and intracellular accumulation of the desired physiologically active protein may be obtained under anaerobic fermentation conditions.

On completion of the fermentation process, the harvested microbial cells which can be used as a source of single cell protein will have a physiologically active protein as a part thereof. This protein substance can then be processed into pellets, a cellular paste, a powder, or any other form suitable for feeding to an animal.

In accordance with the present invention, it is also preferred that the single cell protein having physiologically active protein as a part thereof be treated to ensure that microbial cells are rendered nonviable before the single cell protein is administered directly or further processed. Appropriate treatments include physical or chemical means such as heating the cells at about 70°C for about 10 minutes or at 85°C for about 4 minutes. In general the microbial cells should be heat treated for a period of time and at a temperature sufficient to render the cells non-viable. Treatment with a gas such as ethylene oxide is also used sometimes to render cells non-viable.

In addition, the single cell protein having physiologically active protein as a part thereof can be admixed with any conventional animal feedstuff such as soybean meal, alfalfa meal, cottonseed oil meal, linseed oil meal, cornmeal, cane molasses, urea, bone meal, corncob meal, and the like. The single cell protein having physiologically active protein as a part thereof can also be admixed with any conventional human feedstuff such as cookies, juices, and noodles. The preferred composition of such mixtures would comprise from about 0.1 to 50 percent single cell protein having physiologically active protein as a part thereof and the remainder conventional animal or human feedstuff. Such a broad range is preferred because it will allow a greater flexibility in formulating the feed according to the particular nutritional requirements of the animal or human recipient and to obtain the desired beneficial physiological effects.

The resulting material of this invention, single cell protein having physiologically active protein as a part thereof, can be fed directly in any suitable feed form or in combination with the conventional animal feedstuff to any animal. Suitable animals include any animal which can be sustained on the formulated feed comprising in part proteinaceous material derived from single cell protein. Preferred animals in the process of this invention include animals of commercial value such as dairy and beef cattle, horses, goats, oxen, rabbits, sheep, pigs, chicken, turkey, geese, fish, shrimp, lobster, dogs, cats, and the like. It is also contemplated in the present invention that the term animal includes humans as well.

Although it is recognized that a large portion of protein may be degraded upon ingestion, a significant portion of the ingested protein can be found intact in the intestine. The amount of protein which is then absorbed across the intestinal wall will vary with the nature of the protein and the maturity of the animal. Thus sufficient quantities of physiologically active protein can be delivered by the inventive means to elicit the desired physiological effect.

In the present invention the single cell protein having physiologically active protein as a part thereof may be treated with any substance suitable to slow the digestion of said proteinaceous material by the animal recipient. Typically the treatment consists of treating the protein with the substance in any suitable fashion so as to diminish the protein's susceptability to proteolytic attack. This is desirable because this process will help avoid the problem of having much of the protein digested and destroyed in the stomach thereby reducing the amount of protein available for absorption through the intestinal wall. Typical substances with which the protein can be treated include dimethylurea, trypsin inhibitors, and indigestible polysaccharides such as gum agar, carbon bean gum, agar-agar, Na-algenate, and corragienan.

It should also be pointed out that protein can also be absorbed across other mucous membranes of the body, such as nasal passages. It is likely that during the normal feeding process, some of the proteinaceous feed will be inhaled, thereby supplementing the delivery of physiologically active protein to the animal.

The following calculated example is intended to illustrate the proportion of single cell protein and physiologically active protein necessary to increase the level of physiologically active protein in a representative animal, an adult pig.

<u>CALCULATED EXAMPLE</u>

A typical adult pig weighing about 90 kg consumes about 8.1 kg of feed per day, formulated to contain about 18% total protein. All or part of the animal's protein intake can be provided by single cell protein material. Thus, as much as 2.7 kg of the total feed administered to the animal can come from yeast single cell protein material (comprising about 60% total protein) or about 2.3 kg of the total feed if bacterial SCP material (comprising about 75% total protein) is employed.

The growth hormone content of the genetically altered single cell protein product will be in the range of 5-10% of the total protein. Thus, if the entire protein requirement of the animal is provided by single cell protein material, the feed may contain up to 1.8% growth hormone. Thus, about 146 g of growth hormone can readily be administered to the animal via feed. Depending on the degree of digestion and degree of absorption of the protein -- it may be desirable to provide some of the total protein requirement from other sources, such as soybean meal or the like. The 146 g of growth hormone delivered to the animal via feed represents a dose of 1.6 g/kg body weight.

Assuming up to 99% protein degradation during the digestion process, and further assuming only 1% absorption of the surviving protein across the wall of the small intestine, there will still be delivery of 0.16 mg/kg body weight of intact growth hormone into the animal's bloodstream.

It is known that daily administration of growth hormone via injection of as little as 0.03 mg/kg body weight is sufficient to produce beneficial effects in pigs. It can be seen that by the process of the present invention, significant quantities of growth hormone can be routinely administered to animals by incorporation of genetically modified single cell protein material into the animal's feed.

It should be recognized that protein absorption across the intestinal wall will be more significant in immature animals, so that the feed formulation could be prepared containing less of the genetically altered SCP material, or a source of single cell protein that expresses lower levels of growth hormone could be used.

Reasonable variation and modification are possible in the scope of the foregoing disclosure and the appended claims.

Claims

1. A composition comprising a single cell protein (SCP)
   material c h a r a c t e r i z e d b y said SCP
   material containing a physiologically active protein as
   a part thereof.

2. The composition of claim 1 characterized in that said
   physiologically active protein is a growth hormone; in
   particular wherein said growth hormone is selected from
   bovine, porcine, avian and fish growth hormone.

3. The composition of claim 1 characterized in that said
   physiologically active protein enhances the fat to lean
   ratio of an animal recipient; or          wherein said
   physiologically active protein enhances milk production of
   an animal recipient;  or          wherein said physiologically active protein enhances feed utilization of an animal
   recipient; in particular wherein said microbial cells have
   been treated to decrease the digestion rate in animal
   recipients; in particular wherein said composition is in

- 2 -

0094028

the form of pellets, powder or paste.

4. The composition of at least one of claims 1 to 3 characterized by a content of animal feedstuff or by a content of human foodstuff; in particular containing from 0.1 to 50.0 wt. % of said SCP material.

5. The composition of any of claims 1 to 4 characterized in that said SCP material is obtained through growing by fermentation of microbial cells which have been genetically altered so as to be capable of synthesizing physiologically active protein; in particular wherein said microbial cells have been rendered non-viable; in particular wherein said microbial cells have been rendered non-viable by treatment with heat or ethylene oxide.

6. The composition of claim 5 characterized in that said microbial cells are yeast, fungi or bacteria microorganisms.

7. The composition of claim 6 characterized in that said microbial cell is a genus of bacteria selected from Bacillus, Escherichia, Streptomyces, Micromonospora, Streptoverticillium, Nocardia, Pseudomonas, Methanomonas, Protaminobacter, Methylococcus, Arthrobacter, Methylomonas, Brevibacterium, Acetobacter, Micrococcus, Rhodopseudomonas, Corynebacterium, Mycobacterium, Archromobacter and Microbacterium; in particular wherein said microbial cell is Escherichia coli, Bacillus subtilis or Streptomyces coelicolor; in particular wherein said microbial cell is a genus of fungi and yeast selected from Candida, Hansenula, Torulopsis, Saccharomyces, Pichia, Debaryomyces, Lipomyces, Cryptococcus, Nematospora, Brettanomyces, and Neurospora; in particular wherein said microbial cell is Saccharomyces cerevisiae or Neurospora crassa.

8. A process for enhancing the level of physiologically active protein in an animal characterized by feeding to the

- 3 -

0094028

animal a feed comprising a SCP material containing a physiologically active protein as a part thereof.

9. A process for delivery of a physiologically active protein to an animal characterized by
   a) growing microbial cells whose genome has been altered so as to be capable of synthesizing physiologically active protein when subjected to fermentation,
   b) producing by fermentation of said microbial cells an effluent containing an SCP material containing said physiologically active protein as a part thereof, and
   c) feeding said SCP material from (b) to an animal.

10. The process of claim 8 or 9 characterized by using as said SCP material one as defined in any of claims 2, 3 and 5 to 7.

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| X | DE-A-2 535 926 (IMPERIAL CHEMICAL INDUSTRIES LTD.) * Page 2, paragraph 2; claims 1, 3 * | 1,8 |
| | --- | |
| A | GB-A-1 327 288 (STANDARD OIL CO.) * Claims 1, 4, 6 * | |
| | --- | |
| A | DE-A-2 633 958 (FA. H. MÜLLER) * Claim 1 * | |
| | ----- | |

**CLASSIFICATION OF THE APPLICATION (Int. Cl. ³)**

A 23 K    1/00

**TECHNICAL FIELDS SEARCHED (Int. Cl. ³)**

A 23 K    1/00
A 23 J    1/00

The present search report has been drawn up for all claims

| Place of search BERLIN | Date of completion of the search 20-07-1983 | Examiner SCHULTZE D |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82